# NOUVEAU FASCICULE DE BREVET EUROPEEN

(11) **EP 2 731 996 B2**
(45) Date de publication et mention de la décision concernant l'opposition: **29.06.2022**
(45) Mention de la délivrance du brevet: 04.04.2018
(21) Numéro de dépôt: 12733695.6
(22) Date de dépôt: 06.07.2012
(51) Int. Cl.: C08L 77/00, C08G 69/48, C08K 5/00

(54) **UTILISATION D'UN COMPOSÉ EXTENSEUR DE CHAINE DU POLYAMIDE EN TANT QU'AGENT STABILISANT**
VERWENDUNG EINER POLYAMIDKETTENVERLÄNGERNDEN VERBINDUNG ALS STABILISIERUNGSMITTEL
USE OF A POLYAMIDE CHAIN EXTENDING COMPOUND AS A STABILIZING AGENT

(30) Priorité: 11.07.2011 FR 1156263
(43) Date de publication de la demande: 21.05.2014
(73) Titulaire: Performance Polyamides, SAS, 75009 Paris (FR)
(72) Inventeur: BRADLEY, Gerard, F-69126 Brindas (FR)
(74) Mandataire: Schuck, Alexander
(86) Numéro de dépôt international: PCT/EP2012/063279
(87) Numéro de publication internationale: WO 2013/007644

(56) Documents cités:
- EP-A1- 2 535 365
- WO-A1-2006/122896
- FR-A- 1 401 836
- FR-A1- 2 762 610

## Description

L'invention concerne un polyamide stabilisé vis-à-vis de la chaleur, de la lumière et des intempéries par l'utilisation d'un composé extenseur de chaîne du polyamide comme agent stabilisant vis-à-vis de la chaleur, de la lumière et/ou des intempéries du polyamide. La présente invention concerne aussi des compositions polyamides comprenant au moins un composé extenseur de chaîne du polyamide et éventuellement des charges de renfort et éventuellement des agents modificateurs du choc.

Le polyamide est un polymère synthétique largement utilisé pour la fabrication de divers articles, tels que des pièces moulées et/ou injectées. Le polyamide peut subir des dégradations lorsqu'il est soumis à des éléments ou conditions externes tels que les rayons UV, la chaleur, et/ou les intempéries. Des dégradations peuvent également être induites par la chaleur utilisée au cours de sa fabrication et/ou de sa mise en forme. Cette instabilité se traduit par des dégradations, des pertes de propriétés mécaniques, et des changements de couleur. Ces problèmes peuvent devenir critiques pour un certain nombre d'applications, tels que notamment des pièces dans le domaine de l'automobile qui sont notamment soumises à des chaleurs importantes.

Pour améliorer la stabilité vis-à-vis de la chaleur des polyamides, il est connu de leur associer des agents stabilisants particuliers. De nombreux additifs sont commercialisés à cet effet. On connait par exemple l'utilisation de l'iodure de cuivre, notamment en association avec d'iodure de potassium qui est dans la plupart des cas utilisé et qui fournit de bonnes propriétés de stabilisation. Il est également connu d'utiliser des additifs plus complexes tels que composés antioxydants phénoliques encombrés, des stabilisants présentant au moins un motif amine encombrée de type HALS ou des stabilisants phosphorés.

Toutefois, il existe un besoin d'obtenir des compositions polyamides encore plus performantes au niveau de la stabilisation vis-à-vis de la chaleur, et à moindre coût.

FR-A-1 401 836 décrit un procédé de fabrication en continu de pièces moulées de polyamides et un dispositif pour la réalisation du procédé.

La demanderesse a mis au point une composition polyamide permettant d'obtenir un excellent maintien des propriétés mécaniques après une longue exposition à la chaleur, la lumière et/ou les intempéries en utilisant le diglycidyl éther de bisphénol A comme composé extenseur de chaîne du polyamide en tant qu' agent stabilisant vis-à-vis de la chaleur, de la lumière et/ou des intempéries du polyamide. La composition obtenue présente notamment un bon compromis de propriétés mécaniques et rhéologiques.

La présente invention concerne ainsi l'utilisation du diglycidyl éther de bisphénol A comme composé extenseur de chaîne du polyamide en tant qu'agent stabilisant vis-à-vis de la chaleur, de la lumière et/ou des intempéries du polyamide selon la revendication 1.

On entend par agent stabilisant vis-à-vis de la chaleur, de la lumière et des intempéries du polyamide un composé capable de notamment maintenir un bon niveau de propriétés mécaniques à une composition polyamide soumise à la chaleur, la lumière et/ou les intempéries pendant un temps prolongé.

La composition selon l'invention présente une rétention de la contrainte à la rupture en traction supérieure ou égale à 50 %, mesuré selon la norme ISO 527/1A sur des éprouvettes d'épaisseur 4 mm après un test de vieillissement sous air à 210°C pendant 1000 heures, en comparaison avec la même composition avant le test de vieillissement.

La composition selon l'invention présente plus préférentiellement une rétention de la contrainte à la rupture en traction supérieure ou égale à 50 %, mesuré selon la norme ISO 527/1A sur des éprouvettes d'épaisseur 4 mm après un test de vieillissement sous air à 220°C pendant 1000 heures, en comparaison avec la même composition avant le test de vieillissement.

La composition selon l'invention présente encore plus préférentiellement une rétention de la contrainte à la rupture en traction supérieure ou égale à 50 %, mesuré selon la norme ISO 527/1A sur des éprouvettes d'épaisseur 4 mm après un teste de vieillissement sous air à 230°C pendant 1000 heures, en comparaison avec la même composition avant le test de vieillissement.

La composition selon l'invention peut également présenter une rétention de la contrainte à la rupture en traction supérieure ou égale à 50 %, mesurée selon la norme ISO 527/1A sur des éprouvettes d'épaisseur 4 mm après un test de vieillissement sous air à 240°C pendant 1000 heures, en comparaison avec la même composition avant le test de vieillissement.

Les composés extenseurs de chaîne (chain extender) du polyamide sont habituellement capables de réagir avec les groupements terminaux du polyamide amines ou acides. Les extenseurs de chaînes présentent au moins deux fonctions capables de réagir avec les groupement terminaux du polyamide de manière à connecter deux ou plusieurs chaînes polyamides en fonction de la fonctionnalité de l'extenseur de chaîne et du nombre de groupements terminaux réactifs du polyamide et ainsi accroitre la masse molaire et la viscosité du polyamide modifié.

La composition comprend préférentiellement de 0,01 à 5 % en poids d'extenseurs de chaîne du polyamide, par rapport au poids total de la composition. Plus préférentiellement la composition comprend de 0,1 à 3 % en poids d'extenseurs de chaîne du polyamide, par rapport au poids total de la composition. On peut notamment utiliser de 0,01 à 10 % en poids d'extenseurs de chaine du polyamide, par rapport au poids du polyamide.

Dans le cas où la composition:
- comprend au moins une charges de renfort, un agent modificateur de choc et/ou un autre additif participant à la stabilisation thermique
la composition comprend une teneur en agent extenseur de chaîne du polyamide supérieure à 1 % en poids, voire à 2 % en poids par rapport au poids du polyamide. En outre, cette teneur peut aller de 1,1 à 8 % en poids, notamment de 1,3 à 6 % en poids, voire de 1,5 à 4 % en poids par rapport au poids du polyamide.

Dans le cas où la composition :
- est dépourvue de charges de renfort, d'agent modificateur de choc et/ou d'un autre additif participant à la stabilisation thermique et
- comprend un seul agent extenseur de chaîne,
la composition comprend une teneur en agent(extenseur(s) de chaîne du polyamide supérieure à 2 % en poids par rapport au poids du polyamide. En outre, cette teneur peut aller de 2,05 à 8 % en poids, notamment de 2,1 à 6 % en poids, voire de 2,1 à 4 % en poids par rapport au poids du polyamide.

Les composés extenseurs de chaînes préférés sont insensibles à la teneur en humidité du polyamide dans les conditions de la réaction de polyamidification, et ne génère pas de produits secondaires.

La composition résultant peut notamment comprendre des chaînes de polyamide comprenant des restes de composé extenseur de chaînes liés de manière covalente, des chaînes de polyamide non liées avec un reste de composé extenseur de chaînes et des composés extenseurs de chaînes libres dilués dans la matrice polyamide.

Le polyamide 66 est un polyamide semi-cristallin présentant une viscosité apparente en fondu comprise entre 0,5 et 1500 Pa.s, mesurée selon la norme ISO 11443 à un taux de cisaillement de 1000 s⁻¹ à une température égale à 20°C au-dessus de sa température de fusion du polyamide, préférentiellement comprise entre 0,5 et 1000 Pa.s.

Le composé extenseur de chaîne du polyamide peut être ajouté au polyamide déjà formé ou partiellement formé, tel que notamment par mise en présence avec des oligomères du polyamide. Le composé extenseur de chaîne du polyamide peut être notamment ajouté pendant la polymérisation du polyamide ou alors en mélange avec le polyamide fondu, par exemple par extrusion. On peut également ajouter le composé extenseur de chaîne à froid avec le polyamide puis procéder à une mise en fusion du polyamide.

Les compositions polyamides sont généralement obtenues par mélange des différents composés, charges et/ou additifs, notamment le composé extenseur de chaînes entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, du composé extenseur de chaîne avant préparation de la composition finale. On peut par exemple effectuer un pré-mélange du composé extenseur de chaîne dans une résine, par exemple du polyamide, de façon à réaliser un mélange maitre.

La composition selon l'invention peut comprendre un ou plusieurs autres polymères, de préférence polyamides ou copolyamides.

La composition selon l'invention peut comprendre plus de 20% en poids, préférentiellement plus de 40 % en poids, et plus préférentiellement plus de 50% en poids de polyamide selon l'invention, par rapport au poids total de la composition.

La composition peut en outre comprendre au moins une charge de renfort ou de remplissage. Les charges de renfort ou de remplissage sont des charges classiquement utilisées pour la réalisation de compositions polyamides. On peut notamment citer les charges fibreuses de renfort, telles que telles que des fibres de verre, des fibres de carbone, ou des fibres organiques, les charges non fibreuses, telles que des charges particulaires, lamellaires et/ou les nano-charges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

On préfère notamment utiliser les fibres de renfort, telles que les fibres de verre. De façon préférentielle, la fibre la plus utilisé est la fibre de verre, de type dit coupé (chopped), ayant un diamètre compris entre 7 et 14 µm et une longueur inférieure à 5 mm. Ces charges peuvent présenter un ensimage surfacique qui assure l'adhésion mécanique entre les fibres et la matrice polyamide.

La composition selon l'invention peut comprendre entre 1 et 60 % en poids de charges de renfort ou de remplissage, préférentiellement entre 10 et 40 % en poids, par rapport au poids total de la composition.

La composition selon l'invention comprenant le polyamide tel que défini précédemment peut comprendre au moins un agent modificateur du choc, c'est-à-dire un composé capable de modifier la résistance aux chocs d'une composition polyamide. Ces composés modificateurs du choc comprennent préférentiellement des groupements fonctionnels réactifs avec le polyamide.

On entend selon l'invention par groupements fonctionnels réactifs avec le polyamide, des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 2 µm dans la matrice.

On utilise préférentiellement des agents modificateurs du choc comprenant des groupements fonctionnels réactifs avec le polyamide en fonction de la nature acide ou amine du déséquilibre ΔGT=GTC-GTA (concentration en groupements terminaux acide GTC moins concentration en groupements terminaux amine GTA) du polyamide. Ainsi par exemple, si le ΔGT est « acide » (GTC>GTA) on utilisera préférentiellement des groupements fonctionnels réactifs capables de réagir ou d'interagir chimiquement avec les fonctions acides du polyamide, notamment par covalence, interaction ionique ou hydrogène ou liaison de van der Walls. Si par exemple, le ΔGT est « aminé » (GTA>GTC) on utilisera préférentiellement des groupements fonctionnels réactifs capables de réagir ou d'interagir chimiquement avec les fonctions amines du polyamide, notamment par covalence, interaction ionique ou hydrogène ou liaison de van der Walls. On utilise préférentiellement des agents modificateurs du choc ayant des groupements fonctionnels réactifs avec le polyamide présentant un ΔGT de nature « amine ».

Les agents modificateurs du choc peuvent très bien comprendre en eux-mêmes des groupements fonctionnels réactifs avec le polyamide, par exemple pour ce qui concerne l'éthylènes acide acrylique (EAA).

Il est également possible de leur adjoindre des groupements fonctionnels réactifs avec le polyamide, généralement par greffage ou copolymérisation, par exemple pour l'éthylène-propylène-diène (EPDM) greffé par de l'anhydride maléique.

On peut utiliser selon l'invention, les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidyle méthacrylate. Ces composés selon l'invention peuvent également comprendre en plus d'autres monomères que ceux mentionnés précédemment.

La base du composé modificateur du choc, éventuellement appelé base élastomérique, peut être choisie dans le groupe comprenant : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

En plus des groupements listés ci-dessus, ces agent modificateurs de chocs peuvent comprendre également, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyles notamment époxy, les esters glycidyles glycidyle , les anhydrides notamment les anhydrides maléiques, les oxazolines, les maléïmides, ou leurs mélanges.

Des tels groupements fonctionnels sur les élastomères sont par exemple obtenus par utilisation d'un co-monomère lors de la préparation de l'élastomère.

Comme agents modificateurs de chocs comprenant des groupements fonctionnels réactifs avec le polyamide, on peut notamment citer les terpolymères d'éthylène, ester acrylique et glycidyle méthacrylate, les copolymères d'éthylène et de butyl ester acrylate, les copolymères d'éthylène, n-butyl acrylate et glycidyle méthacrylate, les copolymères d'éthylène et d'anhydride maléique, les copolymères éthylène-propylène-diène greffé par de l'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

La proportion en poids des agents modificateur du choc dans la composition totale est notamment comprise entre 1 et 25 %, préférentiellement entre 5 et 20 %, par rapport au poids total de la composition.

Avantageusement, la composition selon l'invention peut aussi comprendre d'autres additifs participant à la stabilisation thermique de la composition, tels que ceux choisis dans le groupe comprenant : le couple CuI et KI, le couple CuO/KBr, le couple Cu₂O/KBr, les composés phénoliques encombrés, des stabilisants présentant au moins un motif amine encombrée de type HALS, des stabilisants phosphorés organiques ou inorganiques, tel que de l'hypophosphite de sodium ou de manganèse, ou encore des composés comprenant au moins d'un alcool polyhydrique comportant de 2 à 8 groupements hydroxyle aliphatique, en particulier la composition comprend en outre au moins d'un alcool polyhydrique comportant de 2 à 8 groupements hydroxyle aliphatique.

On peut citer ainsi comme alcools polyhydriques ceux mentionné dans le groupe comprenant: les diols, tels que le 1,5-pentanediol, le 2,2-diméthyl-1,3 propanediol, le triéthylène glycol, les polyéthers de glycol, les triols, comme le glycerol, le trimethylolpropane, le 2,3-di-(2'-hydroxyethyl)-cyclohexan-1-ol, l'hexane-1,2,6-triol, le 1,1,1-tris-(hydroxymethyl)ethane, le 3-(2'-hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le 1,1,1-tris-(4'-hydroxyphenyl)-ethane, le 1,1,1-tris-(hydroxyphenyl)-propane, le 1,1,3-tris-(dihydroxy-3-methylphenyl)-propane, le 1,1,4-tris-(dihydroxyphenyl)-butane, le 1,1,5-tris-(hydroxyphenyl)-3-methylpentane, le di-trimethylopropane, l'ethoxylate de trimethylolpropane, ou le propoxylate de trimethylolpropane ; les polyols tels que le pentaerythritol, le dipentaerythritol, et le tripentaerythritol; et les saccharides tels que la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, l'allitol, l'altritol, le gulitol, l'erythritol, le threitol, et le D-gulonique-γ-lactone; et les composés semblables, en particulier l'alcool polyhydrique est choisi parmi les polyols tels que le pentaérythritol, le dipentaérythritol, et le tripentaérythritol.

La teneur en autre additif participant à la stabilisation thermique de la composition peut aller de 0,01 à 5 % en poids par rapport au poids total de la composition.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

Les compositions polyamides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

On préfère notamment des composition polyamides comprenant au un composé extenseur de chaîne du polyamide et de 1 à 60 % en poids de charges de renfort ou de remplissage, et de 1 à 25 % en poids d'agent modificateur du choc, par rapport au poids total de la composition.

Plus spécifiquement, la composition polyamide peut comprendre de 0,01 à 5 % en poids de composé extenseur de chaîne du polyamide, de 5 à 20 % en poids de charges de renfort ou de remplissage, et de 5 à 20 % en poids d'agent modificateur du choc, par rapport au poids total de la composition.

Selon un mode de réalisation, la composition comprend, voire consiste en:
- polyamide PA66, notamment en une teneur allant de 30 à 80 % en poids par rapport au poids total de la composition, le diglycidyl éther de bisphénol A comme extenseur de chaîne, en particulier la teneur en extenseur de chaîne est supérieure à 1 % en poids par rapport au poids du polyamide,
- éventuellement des charges de renfort, en particulier des fibres de verre, notamment en une teneur allant de 10 à 40 % en poids par rapport au poids total de la composition,
- éventuellement un gent modificateur de choc, en particulier comprenant des groupements fonctionnels réactifs avec le polyamide, notamment en une teneur allant de 5 à 20 % en poids par rapport au poids total de la composition,
- éventuellement un autre additifs participant à la stabilisation thermique de la composition, en particulier un alcool polyhydrique ou un couple CuI et KI, CuO/KBr, ou Cu2 O/KBr, notamment en une teneur allant de 0,01 à 5 % en poids par rapport au poids total de la composition et
- éventuellement au moins un aditif choisi parmi les lubrifiants, les agents ignifugeants, les plastifiants, les agents nucléants, les agents anti-UV, les catalyseurs, les antioxydants, les antistatiques, les colorants, les matifiants, les additifs d'aide au moulage, notamment en une teneur allant de 0,01 à 8 % en poids par rapport au poids total de la composition.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage, notamment le moulage par injection, l'extrusion, l'extrusion soufflage, ou encore le rotomoulage. Le procédé d'extrusion peut notamment être un procédé de filage ou de fabrication de films.

La présente invention concerne également la fabrication d'articles de type étoffes imprégnées ou articles composites à fibres continues. Ces articles peuvent notamment être fabriqués par mise en présence d'une étoffe et de la composition polyamide selon l'invention à l'état solide ou fondu. Les étoffes sont des surfaces textiles obtenues par assemblage de fils ou de fibres solidarisés par un procédé quelconque, tel que notamment collage, feutrage, tressage, tissage, tricotage. Ces étoffes sont aussi désignées comme des réseaux fibreux ou filamenteux, par exemple à base de fibres de verre, de fibres de carbone ou autres. Leur structure peut être aléatoire, unidirectionelle (1D), ou multidirectionelle (2D, 2,5D, 3D ou autre).

La présente invention concerne également des articles obtenus par mise en forme de la composition selon l'invention, par exemple par extrusion, moulage, ou moulage par injection. On peut citer comme articles ceux utilisés dans le domaine de l'automobile ou de l'électronique et de l'électricité par exemple.

La présente invention concerne aussi des articles réalisés pour des applications exposées à des températures élevées, notamment des températures supérieures ou égale à 80°C, plus particulièrement des températures supérieures ou égale à 150°C, plus spécifiquement des températures supérieures ou égale à 210°C, obtenus par mise en forme d'une composition selon l'invention.

On entend généralement par articles réalisés pour des applications exposées à des températures élevées, notamment des températures supérieures ou égale à 80°C, des articles fabriquées pour contenir ou transporter des fluides, c'est-à-dire des liquides ou gaz, portés à des températures élevées comme par exemple des articles du circuit de refroidissement d'une automobile qui sont destinés à maintenir le moteur à une température optimale et quasi constante d'environ 100°C. Ces articles selon la présente invention sont ainsi définis par leurs applications qui les exposent à des températures élevées ; ceci impliquant leurs conceptions, fabrications et destinations basées sur cette contrainte technique dans un mode de fonctionnement usuel.

Comme articles soumis à des températures élevées on peut citer par exemple les articles du circuit de refroidissement eau/glycol, par exemple la boite à eau, le tuyau de transfert, le boitier thermostatique, le boitier de dégazage, le radiateur, les articles du circuit d'air comme par exemple la tubulure turbo, l'échangeur air/air (intercooler), le boitier d'entrée ou de sortie d'air de refroidisseur turbo, le circuit de recirculation des gaz d'échappement (Exhaust Gas Recycling), le collecteur d'admission d'air et tubulures associées, le boitier de catalyseur, les pièces du groupe moto-ventilateur, les refroidisseurs intermédiaires, et les articles du circuit d'huile comme les couvres culasse, le carter d'huile, le module de filtration d'huile, le carter de distribution et la tuyauterie d'assemblage transportant l'huile. Ces articles sont bien connus du domaine des véhicules propulsés par un moteur comme les automobiles.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

Avant extrusion, les granulés de polyamide 66 présentant un IV de 153 ml/g (Indice de viscosité en solution du polyamide dans l'acide formique (IV en mL/g) selon la norme ISO 307) sont séchés à une teneur en eau inférieure à 1000 ppm. Des formulations sont réalisées par mélange des différents composants et additifs en voie fondu dans une extrudeuse bi-vis co-rotative WERNER&PLEIFEDER ZSK 40 fonctionnant à 40 kg/h et à une vitesse de 230-250 trs/min. Les températures de consigne des 8 zones sont respectivement : 245, 245, 245, 250, 255, 260, 260, 265 °C. Tous les composants de la formulation sont introduits au début de l'extrudeuse. Le jonc sorti d'extrudeuse est refroidi dans un bac d'eau, coupé sous la forme de granulés à l'aide d'un granulateur et conditionnés dans un sac thermo-sellé. Avant d'être injectés, les granulés sont séchés de sorte à obtenir un taux d'humidité inférieur à 1000 ppm.

Les additifs utilisés sont les suivants :
- 1,5 % en poids de composé extendeur de chaîne: Araldite^{®} GT7071

### (Huntsman)

- 15 % en poids d'agent modificateur de chocs : Exxelor VA1801 (copolymère éthylènique greffé anhydride maléique)
- 0,2 % en poids de CuI et KI de AJAY Europe
- 15 % en poids de fibres de verre OCV 983 de Owens Corning Vetrotex
les pourcentage en poids sont exprimés en poids par rapport au poids total de la composition.

Les formulations réalisées sont injectées, sur une presse DEMAG 50T à 280-300°C avec une température de moule de 80°C, sous la forme d'éprouvettes multifonctions d'épaisseur 4 mm pour caractériser les propriétés mécaniques en traction et en tension (moyenne obtenue sur 5 échantillons) selon la norme ISO 527/1A, avant et après vieillissement thermique sous air.

Le vieillissement thermique ventilé sous air est effectué en plaçant les éprouvettes dans une étuve Heraeus TK62120 régulée à la température choisie. A différents temps de vieillissement, des éprouvettes sont sorties de l'étuve, refroidies à température ambiante et placées dans des sacs thermo-sellés pour éviter qu'elles ne reprennent d'humidité avant évaluation de leurs propriétés mécaniques.

On définit alors la rétention de contrainte à la rupture ou de résistance à l'impact à un temps de vieillissement donné par le rapport à ces mêmes propriétés avant vieillissement. On définit ainsi la rétention en pourcentage.

Les propriétés de la composition polyamide sont regroupées dans les tableaux 1 et 2 suivants :

**Tableau 1**

| **Propriétés** | **Avant vieillissement** | **Après vieillissement 1000 h 150°C** | **Après vieillissement 700 h 210°C** | **Après vieillissement 1000 h 210°C** |
|---|---|---|---|---|
| Module flexion (MPa) | 4820 | 4910 | 5230 | 5300 |
| Contrainte flexion maximum (MPa) | 157,5 | 153,9 | 116,2 | 105,5 |
| Déformation flexion (%) | 4,6 | 3,81 | 2,4 | 2,19 |

**Tableau 2**

| **Propriétés** | **Traction : module (MPa)** | **Traction : contrainte à la rupture (MPa)** | **Traction : déformation (%)** |
|---|---|---|---|
| Avant vieillissement | 4773 | 92,5(100%) | 3,56 |
| Après vieillissement 2000 h 150°C | 5110 | 82,5 (89%) | 1,9 |
| Après vieillissement 1000 h 190°C | 4708 | 67,5 (73%) | 1,55 |
| Après vieillissement 1000 h 210°C | 5998 | 67 (72%) | 1,44 |
| Après vieillissement 2000 h 220°C | 5360 | 59,3 (64%) | 1,21 |
| Après vieillissement 1000 h 230°C | 4707 | 61 (65%) | 1,39 |
| Après vieillissement 1000 h 240°C | 4784 | 63,6 (68%) | 1,45 |

On observe ainsi que l'ajout du composé selon l'invention au polyamide permet une rétention remarquable des propriétés mécaniques à la fois en traction et en tension là ou des compositions classiques auraient vus une chute drastique de ces propriétés.

La composition selon l'invention présente ainsi rétention de la contrainte à la rupture en traction supérieure ou égale à 50 %, mesuré selon la norme ISO 527/1A sur des éprouvettes d'épaisseur 4 mm après un teste de vieillissement sous air à 210°C pendant 1000 heures, en comparaison avec la même composition avant le test de vieillissement.

## Revendications

1. Utilisation du diglycidyl éther de bisphénol A comme composé extenseur de chaîne du polyamide en tant qu'agent stabilisant vis-à-vis de la chaleur, de la lumière et/ou des intempéries du polyamide **caractérisée** en que la composition comprenant au moins le polyamide 66 et le composé extenseur de chaîne du polyamide présente une rétention de la contrainte à la rupture en traction supérieure ou égale à 50 %, mesuré selon la norme ISO 527/1A sur des éprouvettes d'épaisseur 4 mm après un test de vieillissement sous air à 210°C pendant 1000 heures, en comparaison avec la même composition avant le test de vieillissement.

2. Utilisation selon la revendication 1, **caractérisée en ce que** la composition comprenant au moins le polyamide 66 et le composé extenseur de chaîne du polyamide comprend de 0,01 à 5 % en poids de composé extenseur de chaîne du polyamide, par rapport au poids total de la composition.

3. Utilisation selon l'une quelconque des revendications 1 à 2, **caractérisée en ce que** la composition comprenant au moins le polyamide 66 et le composé extenseur de chaîne du polyamide comprend au moins une charge de renfort ou de remplissage.

4. Utilisation selon l'une quelconque des revendications 1 à 3, **caractérisée en ce que** la composition comprenant au moins le polyamide 66 et le composé extenseur de chaîne du polyamide comprend au moins un agent modificateur du choc.

5. Utilisation selon l'une quelconque des revendications 1 à 4, **caractérisée en ce que** la composition comprenant au moins le polyamide 66 et le composé extenseur de chaîne du polyamide comprend au moins un autre additif participant à la stabilisation thermique de la composition.

6. Utilisation selon l'une quelconque des revendications 1 à 5, **caractérisée en ce que** les articles réalisés à partir de la composition comprenant au moins le polyamide 66 et le composé extenseur de chaîne du polyamide sont des articles réalisés pour des applications exposées à des températures élevées, notamment des températures supérieures ou égale à 80°C.

7. Utilisation selon la revendication 6, **caractérisée en ce que** les articles sont ceux fabriqués pour contenir ou transporter des fluides.

## Patentansprüche

1. Verwendung von Bisphenol A-Diglycidylether als eine Polyamid-Kettenverlängerungsverbindung als Mittel zur Stabilisierung des Polyamids gegenüber Wärme, Licht und/oder Witterungseinflüssen, **dadurch gekennzeichnet, dass** die Zusammensetzung, die mindestens das Polyamid 66 und die Polyamid-Kettenverlängerungsverbindung umfasst, eine Retention der gemäß ISO-Norm 527/1A an Prüfkörpern mit einer Dicke von 4 mm nach einem Alterungstest an der Luft bei 210°C über einen Zeitraum von 1000 Stunden gemessenen Bruchspannung größer gleich 50 % im Vergleich mit derselben Zusammensetzung vor dem Alterungstest aufweist.

2. Verwendung nach Anspruch 1, **dadurch gekennzeichnet, dass** die Zusammensetzung, die mindestens das Polyamid 66 und die Polyamid-Kettenverlängerungsverbindung umfasst, 0,01 bis 5 Gew.- % Polyamid-Kettenverlängerungsverbindung, bezogen auf das Gesamtgewicht der Zusammensetzung, umfasst.

3. Verwendung nach einem der Ansprüche 1 bis 2, **dadurch gekennzeichnet, dass** die Zusammensetzung, die mindestens das Polyamid 66 und die Polyamid-Kettenverlängerungsverbindung umfasst, mindestens einen verstärkenden oder streckenden Füllstoff umfasst.

4. Verwendung nach einem der Ansprüche 1 bis 3, **dadurch gekennzeichnet, dass** die Zusammensetzung, die mindestens das Polyamid 66 und die Polyamid-Kettenverlängerungsverbindung umfasst, mindestens einen Schlagzähigkeitsmodifikator umfasst.

5. Verwendung nach einem der Ansprüche 1 bis 4, **dadurch gekennzeichnet, dass** die Zusammensetzung, die mindestens das Polyamid 66 und die Polyamid-Kettenverlängerungsverbindung umfasst, mindestens ein weiteres Additiv, das an der thermischen Stabilisierung der Zusammensetzung teilnimmt, umfasst.

6. Verwendung nach einem der Ansprüche 1 bis 5, **dadurch gekennzeichnet, dass** es sich bei den aus der Zusammensetzung, die mindestens das Polyamid 66 und die Polyamid-Kettenverlängerungsverbindung umfasst, hergestellten Gegenständen um Gegenstände für Anwendungen unter Einwirkung hoher Temperaturen, insbesondere Temperaturen größer gleich 80°C, handelt.

7. Verwendung nach Anspruch 6, **dadurch gekennzeichnet, dass** es sich bei den Gegenständen um Gegenstände zur Aufnahme oder zum Transport von Fluiden handelt.

## Claims

1. Use of diglycidyl ether of bisphenol A as a polyamide chain-extending compound as an agent for stabilizing the polyamide toward heat, light and/or bad weather, **characterized in that** the composition comprising at least the polyamide 66 and the polyamide chain-extending compound has a retention of the tensile breaking stress of greater than or equal to 50 %, measured according to standard ISO 527/1A on specimens 4 mm thick after an aging test in air at 210°C for 1000 hours, in comparison with the same composition before the aging test.

2. Use according to Claim 1, **characterized in that** the composition comprising at least the polyamide 66 and the polyamide chain-extending compound comprises from 0.01 % to 5 % by weight of polyamide chain-extending compound relative to the total weight of the composition.

3. Use according to any one of Claims 1 to 2, **characterized in that** the composition comprising at least the polyamide 66 and the polyamide chain-extending compound comprises at least one reinforcing or bulking filler.

4. Use according to any one of Claims 1 to 3, **characterized in that** the composition comprising at least the polyamide 66 and the polyamide chain-extending compound comprises at least one impact modifier.

5. Use according to any one of Claims 1 to 4, **characterized in that** the composition comprising at least the polyamide 66 and the polyamide chain-extending compound comprises at least one other additive participating in the thermal stabilization of the composition.

6. Use according to any one of Claims 1 to 5, **characterized in that** the articles made from the composition comprising at least the polyamide 66 and the polyamide chain-extending compound are articles made for applications exposed to high temperatures, especially temperatures of greater than or equal to 80°C.

7. Use according to Claim 6, **characterized in that** the articles are those manufactured to contain or transport fluids.
